# EUROPÄISCHE PATENTSCHRIFT

(11) **EP 2 730 551 B1**
(45) Veröffentlichungstag und Bekanntmachung des Hinweises auf die Patenterteilung: **08.04.2015**
(21) Anmeldenummer: 12192453.4
(22) Anmeldetag: 13.11.2012
(51) Int. Cl.: C04B 35/043, C04B 35/443, C04B 35/581

(54) **Verfahren zur Herstellung eines feuerfesten Werkstoffes auf Basis von Magnesia oder Magnesia-Spinell sowie ein feuerfester Werkstoff auf Basis von Magnesia oder Magnesia-Spinell**
Method for the production of a refractory material based of magnesia or magnesia spinel and a refractory material based of magnesia or magnesia spinel
Procédé de fabrication d'un matériau réfractaire à base de magnésie ou de magnésie-spinelle ainsi qu'un matériau réfractaire à base de magnésie ou de magnésie-spinelle

(43) Veröffentlichungstag der Anmeldung: 14.05.2014
(73) Patentinhaber: Refractory Intellectual Property GmbH & Co. KG, 1100 Wien (AT)
(72) Erfinder: Harald Harmuth, 8700 Leoben (AT); Sabine Gschiel, 8700 Leoben (AT); Zoltan Lences, 84101 Bratislava (SK); Pavol Sajgalik, 82108 Bratislava (SK)
(74) Vertreter: Berkenbrink, Kai-Oliver

(56) Entgegenhaltungen:
- WO-A1-92/22517
- US-A1- 2012 231 243
- XIONG Y ET AL: "Microstructure and properties of translucent Mg-sialon ceramics prepared by spark plasma sintering", MATERIALS SCIENCE AND ENGINEERING A: STRUCTURAL MATERIALS:PROPERTIES, MICROSTRUCTURE & PROCESSING, LAUSANNE, CH, Bd. 488, Nr. 1-2, 15. August 2008 (2008-08-15), Seiten 475-481, XP022683569, ISSN: 0921-5093, DOI: 10.1016/J.MSEA.2007.11.041 [gefunden am 2007-11-22]
- JIANG J ET AL: "Phase assemblages of (Ca,Mg)-alpha-sialon ceramics derived from an alpha-sialon powder prepared by SHS", JOURNAL OF THE EUROPEAN CERAMIC SOCIETY, ELSEVIER SCIENCE PUBLISHERS, BARKING, ESSEX, GB, Bd. 23, Nr. 13, 1. Dezember 2003 (2003-12-01), Seiten 2343-2349, XP004434382, ISSN: 0955-2219, DOI: 10.1016/S0955-2219(03)00043-8

## Beschreibung

Die Erfindung betrifft ein Verfahren zur Herstellung eines feuerfesten Werkstoffes auf Basis von Magnesia oder Magnesia-Spinell sowie einen feuerfesten Werkstoff auf Basis von Magnesia oder Magnesia-Spinell.

Der Begriff "feuerfester Werkstoff" im Sinne der Erfindung bezeichnet insbesondere keramische Erzeugnisse mit einer Einsatztemperatur von über 600 °C und bevorzugt feuerfeste Werkstoffe gemäß DIN 51060, also Werkstoffe mit einem Segerkegelfallpunkt größer SK17.

Feuerfeste Werkstoffe sind in Form von geformten feuerfesten Erzeugnissen, also beispielsweise Steinen, und ungeformten feuerfesten Erzeugnissen, also insbesondere Feuerbetonen, feuerfesten Massen sowie feuerfesten Mörteln bekannt.

Feuerfeste Werkstoffe bauen insbesondere auf keramischen Rohstoffen auf, zu denen insbesondere auch Magnesia (Magnesiumoxid, MgO) und Magnesia-Spinell (Magnesiumaluminat, MgO·Al₂O₃, MgAl₂O₄) gehören.

Auf Magnesia oder Magnesia-Spinell basierende feuerfeste Werkstoffe zeichnen sich durch gute feuerfeste Eigenschaften aus. Für bestimmte Anwendungen wäre es jedoch wünschenswert, auf Magnesia oder Magnesia-Spinell basierende feuerfeste Werkstoffe mit verbesserten feuerfesten Eigenschaften zur Verfügung zu stellen. Beispielsweise wäre für zahlreiche Anwendungen von auf Magnesia oder Magnesia-Spinell basierenden feuerfesten Werkstoffen eine Verbesserung der Festigkeit, eine Verringerung der Sprödigkeit, sowie eine Verbesserung der Korrosionsbeständigkeit und der Oxidations- und Infiltrationsbeständigkeit wünschenswert.

Es hat in der Vergangenheit daher nicht an Versuchen gefehlt, auf Magnesia oder Magnesia-Spinell basierende feuerfeste Werkstoffe mit verbesserten feuerfesten Eigenschaften zur Verfügung zu stellen.

Das US-Patent 4,557,884 beschreibt insoweit beispielsweise ein Verfahren zur Herstellung eines feuerfesten Werkstoffes auf Basis von Magnesia, bei dem sich beim Brand eine Bindephase aus Magnesium-SiAlON-Polytyp ausbildet.

WO 92/22517 offenbart ein Verfahren zur Herstellung eines feuerfesten Werkstoffes auf Basis von Magnesia mit einer Aluminiumnitrid Bindephase.

Der Erfindung liegt die Aufgabe zugrunde, ein Verfahren zur Verfügung zu stellen, durch den ein feuerfester Werkstoff auf Basis von Magnesia oder Magnesia-Spinell mit verbesserten feuerfesten Eigenschaften herstellbar ist, insbesondere mit einer hervorragenden Festigkeit, Korrosionsbeständigkeit, Oxidationsbeständigkeit und Infiltrationsbeständigkeit sowie einer geringen Sprödigkeit. Eine weitere Aufgabe der Erfindung liegt darin, einen feuerfesten Werkstoff auf Basis von Magnesia oder Magnesia-Spinell mit solchen Eigenschaften zur Verfügung zu stellen.

Zur Lösung der erstgenannten Aufgabe wird erfindungsgemäß zur Verfügung gestellt ein Verfahren zur Herstellung eines feuerfesten Werkstoffes auf Basis von Magnesia oder Magnesia-Spinell mit folgenden Schritten:
- Zur Verfügungstellung eines Versatzes, umfassend
   i. eine erste Komponente aus wenigstens einem der folgenden Stoffe: Magnesia oder Magnesia-Spinell;
   ii. eine zweite Komponente, umfassend Stoffe, durch die bei Beaufschlagung mit Temperatur eine AlN-Polytypoid umfassende Bindephase ausbildbar ist;
- Beaufschlagen des Versatzes mit Temperatur in einem Temperaturbereich, in dem die zweite Komponente eine AlN-Polytypoid umfassende Bindephase ausbildet; wobei
- der Versatz während des Beaufschlagens mit Temperatur in diesem Temperaturbereich mit Druck beaufschlagt wird.

Die Erfindung geht von der Überlegung aus, einen auf Magnesia oder Magnesia-Spinell basierenden feuerfesten Werkstoff dadurch herzustellen, dass Körner aus Magnesia oder Magnesia-Spinell durch eine Bindephase gebunden beziehungsweise versintert werden, die einen AlN-Polytypoid umfasst.

Überraschenderweise hat sich im Rahmen der Erfindung nunmehr herausgestellt, dass sich zahlreiche Eigenschaften entsprechend hergestellter feuerfester Werkstoffe allein dann nachhaltig verbessern lassen, wenn die Ausgangsstoffe des feuerfesten Werkstoffes während des keramischen Brandes mit Druck beaufschlagt werden. Insbesondere die feuerfesten Eigenschaften hinsichtlich der Festigkeit, der Korrosionsbeständigkeit, der Sprödigkeit sowie der Oxidations- und Infiltrationsbeständigkeit von feuerfesten Werkstoffen auf Basis von Magnesia oder Magnesia-Spinell, die eine AlN-Polytypoid umfassende Bindephase aufweisen, lassen sich erheblich verbessern, wenn diese Werkstoffe während des keramischen Brandes mit Druck beaufschlagt werden.

Als "Polytyp" wird eine Substanz bezeichnet, die in mehreren verschiedenen strukturellen Modifikationen vorkommt, von denen jede aus Stapeln von Schichten im wesentlichen identischer Struktur und Zusammensetzung aufgebaut ist, wobei sich die Modifikationen nur hinsichtlich ihrer Stapelfolge unterscheiden. Als "Polytypoid" wird eine Substanz in Form eines Polytypen bezeichnet, die dieser strengen Definition nicht entspricht; vielmehr schließen Polytypoide auch Minerale derselben Typologie oder mit geringfügig unterschiedlicher Zusammensetzung ein. Nach gängiger Definition spricht man von einem Polytypen, wenn sich bei allenfalls geringer Abweichung in der chemischen Zusammensetzung die Stapelfolge der Schichten um nicht mehr als 0,25 apfu (Atome pro Formeleinheit) einer beliebigen Bestandteilseinheit unterscheidet. Unterscheidet sich die Stapelfolge der Schichten um mehr als diese 0,25 apfu, spricht man von einem Polytypoid (siehe hierzu auch [1] Nickel E.H., Girce J.D.: " The IMA commission on new minerals and mineral names: Procedures and guidelines on mineral nomenclature, 1998". The Canadian Mineralogist, Vol. 36 (1998); [2] Bailey S.W et al.: "Report of the international mineralogical association (IMA)-international union of crystallography (IUCr) joint committee on nomenclature". Canadian Mineralogist, Vol. 16 pp 113-117 (1978)).

Erfindungsgemäß ist im erfindungsgemäßen feuerfesten Werkstoff als AlN-Polytypoid einer der zwei folgenden AlN-Polytypoide vorgesehen beziehungsweise umfasst die zweite Komponente Stoffe, durch die bei Beaufschlagung mit Temperatur eine Bindephase ausbildbar ist, die einen der zwei folgenden AlN-Polytypoide umfasst: AlN-Polytypoid bestehend aus den Elementen Mg, Al, O und N (nachfolgend als "MgAlON-Phase", "MgAlON-AlN-Polytypoid" oder "MgAlON-Polytypoid" bezeichnet) oder AlN-Polytypoid bestehend aus den Elementen Mg, Si, Al, O und N (nachfolgend als "MgSiAlON-Phase" oder "MgSiAlON-AlN-Polytypoid" oder "MgSiAlON-Polytypoid" bezeichnet).

Bei der Ausübung des erfindungsgemäßen Verfahrens wird zunächst ein die Rohstoffe beziehungsweise Komponenten, die die Ausgangsstoffe zur Herstellung des feuerfesten Werkstoffs durch das erfindungsgemäße Verfahren darstellen, umfassender Versatz zur Verfügung gestellt.

Zur Verbesserung der Homogenität des Versatzes kann vorgesehen sein, diesen zu mischen, beispielsweise durch einen Attritor, einen Rollenmischer oder einen Zwangsmischer, beispielsweise einen Zwangsmischer des Unternehmens Gustav Eirich GmbH & Co KG, Hardheim, Deutschland.

Soweit durch das erfindungsgemäße Verfahren ein feuerfester Werkstoff in Form eines geformten Erzeugnisses hergestellt werden soll, kann der Versatz geformt werden, insbesondere durch Pressen. Dabei kann vorgesehen sein, dem Versatz ein Bindemittel zuzufügen, insbesondere ein temporäres Bindemittel wie beispielsweise Isopropanol. Der zu einem Grünkörper geformte Versatz kann anschließend getrocknet werden, beispielsweise bei einer Temperatur im Bereich von 80 - 120°C.

Anschließend wird der, gegebenenfalls zu einem Grünkörper geformte, Versatz mit Temperatur beaufschlagt. Erfindungsgemäß wird der Versatz durch die Temperaturbeaufschlagung auch in einem solchen Temperaturbereich mit Temperatur beaufschlagt, in dem die Stoffe der zweiten Komponente des Versatzes eine AlN-Polytypoid umfassende Bindephase ausbilden. Die Temperaturbeaufschlagung in diesem Bereich wird üblicherweise, wie auch hierin, als keramischer Brand bezeichnet. Durch die sich während des keramischen Brandes ausbildende Bindephase werden die Stoffe der ersten Komponente, also körniges Gut in Form von Magnesia und/oder Magnesia-Spinell, gebunden beziehungsweise miteinander versintert. Der Temperaturbereich, in dem die Stoffe der zweiten Komponente während des keramischen Brandes AlN-Polytypoid umfassende Bindephase ausbilden, hängt von der jeweiligen Zusammensetzung des Versatzes und insbesondere von der jeweiligen Zusammensetzung der zweiten Komponente des Versatzes ab. Erfindungsgemäß hat sich herausgestellt, dass aus Stoffen, aus denen bei Beaufschlagung mit AlN-Polytypoid umfassende Bindephase ausbildbar ist, insbesondere bei Temperaturen ab 1.200°C AlN-Polytypoid umfassende Bindephase ausbildbar ist, so dass erfindungsgemäß insbesondere vorgesehen sein kann, dass der Versatz mit einer Temperatur von wenigstens 1.200°C, 1.300°C oder 1.400°C beaufschlagt wird. Ferner kann erfindungsgemäß vorgesehen sein, dass der Versatz mit einer Temperatur von nicht über 1.800°C beaufschlagt wird, also beispielsweise auch nicht mit einer Temperatur von über 1.750°C, 1.700°C oder 1.650°C. Besonders bevorzugt wird der Versatz im Temperaturbereich von 1.400°C bis 1.650°C mit Temperatur beaufschlagt, um aus den Stoffen der zweiten Komponente AlN-Polytypoid umfassende Bindephase auszubilden.

Während der Beaufschlagung des Versatzes mit Temperatur kann der Versatz zusätzlich mit einem Stickstoff (N₂) umfassenden Gas beaufschlagt werden beziehungsweise kann die Beaufschlagung des Versatzes mit Temperatur in einer Stickstoffatmosphäre erfolgen. Die Beaufschlagung des Versatzes mit Temperatur in einer Stickstoffatmosphäre kann für die gesamte oder einen Teil der Dauer erfolgen, in der der Versatz mit Temperatur beaufschlagt wird. Insbesondere kann die Beaufschlagung des Versatzes mit Temperatur in einer Stickstoffatmosphäre während der Dauer erfolgen, in der der Versatz mit Temperatur in einem Temperaturbereich beaufschlagt wird, in dem die zweite Komponente eine AlN-Polytypoid umfassende Bindephase ausbildet. Wie weiter unten näher ausgeführt, kann die Beaufschlagung des Versatzes mit Temperatur in einer Stickstoffatmosphäre insbesondere während des keramischen Brandes notwendig sein, um den Versatz zu nitrieren.

Die Beaufschlagung des Versatzes mit Temperatur in einem Temperaturbereich, in dem die Stoffe der zweiten Komponente AlN-Polytypoid umfassende Bindephase ausbilden, kann für eine solche Dauer erfolgen, innerhalb derer die Stoffe der zweiten Komponente im gewünschten Umfang AlN-Polytypoid umfassende Bindephase ausgebildet haben. Beispielsweise kann die Beaufschlagung des Versatzes mit Temperatur in diesem Temperaturbereich für eine Dauer von wenigsten 60 Minuten, also beispielsweise auch für eine Dauer von wenigstens 90 oder 120 Minuten durchgeführt werden. Ferner kann die Beaufschlagung des Versatzes mit Temperatur in diesem Temperaturbereich für eine Dauer von höchstens 600 Minuten erfolgen, also beispielsweise auch für eine Dauer von höchstens 400, 300, 240, 210 oder 180 Minuten. Besonders bevorzugt wird der Versatz in einem Temperaturbereich, in dem die Stoffe der zweiten Komponente AlN-Polytypoid umfassende Bindephase ausbilden, für eine Dauer im Bereich von 60 - 180 Minuten mit Temperatur beaufschlagt.

Wie zuvor ausgeführt, ist erfindungsgemäß nunmehr vorgesehen, dass der Versatz während des Beaufschlagens mit Temperatur in diesem Temperaturbereich, in dem die Stoffe der zweiten Komponente AlN-Polytypoid umfassende Bindephase ausbilden, zusätzlich mit Druck beaufschlagt wird.

Der Versatz kann für den gesamten oder einen Teil des Zeitraums, während dessen der Versatz in diesem Temperaturbereich mit Temperatur beaufschlagt wird, mit Druck beaufschlagt werden. Mit anderen Worten: Erfindungsgemäß wird der Versatz während des keramischen Brandes mit Druck beaufschlagt. Der Druck, mit dem der Versatz während des keramischen Brandes beaufschlagt wird, liegt deutlich über Normaldruck, insbesondere bevorzugt über 1 MPa (Megapascal). Besonders bevorzugt wird der Versatz während des keramischen Brandes mit einem Druck von wenigstens 2, 4, 6, 8 oder 10 MPa beaufschlagt. Ferner kann vorgesehen sein, dass der Versatz mit einem Druck von höchstens 50 MPa beaufschlagt wird, also beispielsweise auch mit einem Druck von höchstens 40, 35 oder 30 MPa. Besonders bevorzugt wird der Versatz während des keramischen Brandes erfindungsgemäß mit einem Druck im Bereich von 10 - 30 MPa beaufschlagt.

Nachdem der Versatz entsprechend mit Temperatur und Druck beaufschlagt worden ist, wird der gebrannte Versatz abgekühlt. Nach der Abkühlung ist der feuerfeste Werkstoff aus dem Versatz hergestellt.

Aus dem Stand der Technik sind verschiedene Technologien bekannt, durch die Versätze während eines keramischen Brandes mit Druck beaufschlagbar sind. Diese Technologien können auch bei der Durchführung des vorliegenden Verfahrens Anwendung finden, um den Versatz während des keramischen Brandes mit Druck zu beaufschlagen. Bei entsprechenden Technologien handelt es sich beispielsweise um isostatisches oder uniaxiales Heißpressen. Ein solches Heißpressen kann beispielsweise, wie aus dem Stand der Technik bekannt, in einer Graphitform durchgeführt werden.

Der Versatz umfasst als Komponenten wenigstens eine erste Komponente sowie eine zweite Komponente. Die erste Komponente ist bevorzugt als Grobfraktion ausgebildet und weist wenigstens eine der folgenden Komponenten, bevorzugt in körniger Form auf: Magnesia oder Magnesia-Spinell. Die zweite Komponente ist bevorzugt als Feinfraktion ausgebildet und liegt in Form solcher Stoffe vor, dass aus diesen bei Beaufschlagung mit Temperatur AlN-Polytypoid umfassende Bindephase ausbildbar ist.

Die zweite Komponente umfasst mehrere Stoffe. Die Zusammensetzung der zweiten Komponente aus diesen Stoffen ist dabei derart, dass durch die zweite Komponente bei Beaufschlagung des Versatzes mit Temperatur eine AlN-Polytypoid umfassende Bindephase ausbildbar ist. Beim keramischen Brand des Versatzes bildet die zweite Komponente damit eine Bindephase aus, die AlN-Polytypoid umfasst.

Die konkrete Auswahl der Stoffe, die die zweite Komponente umfasst, ist insoweit innerhalb eines breiten Spektrums möglich und für den Fachmann ohne weiteres durchführbar. Entscheidend für den Erfolg der Erfindung ist, dass die zweite Komponente solche Stoffe umfasst, die beim keramischen Brand eine Bindephase ausbilden, die AlN-Polytypoid umfasst.

Bekanntermaßen umfasst ein AlN-Polytypoid in Form eines MgAlON-Polytypoiden die Elemente Magnesium (Mg), Aluminium (A1), Sauerstoff (O) und Stickstoff (N). Nach einer Ausführungsform ist vorgesehen, dass die zweite Komponente Stoffe umfasst, die jeweils wenigstens eines der vorbezeichneten Elemente umfassen.

Zur Ausbildung von AlN-Polytypoid in Form von MgAlON-Polytypoid in der Bindephase während des keramischen Brandes bei der Durchführung des erfindungsgemäßen Verfahrens kann die zweite Komponente daher beispielsweise wenigstens einen der folgenden Stoffe umfassen: MgO, MgAl₂O₄, Al₂O₃, Al, AlN oder AlON. Bevorzugt umfasst die zweite Komponente als Stoff stets AlN, da erfindungsgemäß festgestellt wurde, dass sich dieser Stoff sehr vorteilhaft auf die Bildung von MgAlON-Polytypoid in der Bindephase auswirkt. Nach einer bevorzugten Ausführungsform umfasst die zweite Komponente MgO (beispielsweise 25 - 98 Masse-%), AlN (beispielsweise 1 - 45 Masse-%) und Al₂O₃ (beispielsweise 2 - 40 Masse-%). Nach einer anderen bevorzugten Ausführungsform umfasst die zweite Komponente die Stoffe MgAl₂O₄ (beispielsweise 4 - 95 Masse-%), AlN (beispielsweise 1 - 45 Masse-%) und MgO (beispielsweise 1 - 95 Masse-%). Die vorstehenden Angaben in Masse-% beziehen sich jeweils auf den Anteil des jeweiligen Stoffes an der Gesamtmasse der Bindephase.

Bekanntermaßen umfasst ein AlN-Polytypoid in Form eines MgSiAlON-Polytypoiden die Elemente Magnesium (Mg), Silizium (Si), Aluminium (Al), Sauerstoff (O) und Stickstoff (N). Nach einer Ausführungsform ist vorgesehen, dass die zweite Komponente Stoffe umfasst, die jeweils wenigstens eines der vorbezeichneten Elemente umfassen.

Zur Ausbildung von MgSiAlON-Polytypoid in der Bindephase während des keramischen Brandes bei der Durchführung des erfindungsgemäßen Verfahrens kann die zweite Komponente daher beispielsweise wenigstens einen der folgenden Stoffe umfassen: MgO, MgAl₂O₄, Al₂O₃, Al, AlN, AlON, Si, Si₃N₄ oder SiO₂. Bevorzugt umfasst die zweite Komponente als Stoff stets AlN, da erfindungsgemäß festgestellt wurde, dass sich dieser Stoff sehr vorteilhaft auf die Bildung von MgSiAlON-Polytypoid in der Bindephase auswirkt. Nach einer bevorzugten Ausführungsform umfasst die zweite Komponente die folgenden Stoffe: MgO (beispielsweise 20 - 45 Masse-%), Si₃N₄ (beispielsweise 10 - 35 Masse-%), Al₂O₃ (beispielsweise 10 - 40 Masse-%) und AlN (beispielsweise 10 - 40 Masse-%). Nach eine anderen bevorzugten Ausführungsform umfasst die zweite Komponente die folgenden Stoffe: MgO (beispielsweise 20 - 45 Masse-%), Si₃N₄ (beispielsweise 3-7 Masse-%), Al₂O₃ (beispielsweise 10 - 40 Masse-%), AlN (beispielsweise 10 - 40 Masse-%) und Si (beispielsweise 8 - 20 Masse-%). Die vorstehenden Anteile in Masse-% beziehen sich auf die Anteile der jeweiligen Stoffe an der Gesamtmasse der zweiten Komponente.

Kumulativ können die in den vorgenannten Ausführungsbeispielen genannten Zusammensetzungen für die zweite Komponente MgAl₂O₄ umfassen (beispielsweise in Anteilen von 1 - 50 Masse-%, bezogen auf die Gesamtmasse der zweiten Komponente). Der Vorteil einer MgAl₂O₄ umfassenden zweiten Komponente liegt insbesondere darin, dass durch die Anwesenheit von MgAl₂O₄ in der zweiten Komponente die unerwünschte Bildung von Forsterit in der Bindephase während der Temperaturbeaufschlagung unterdrückt werden kann. Die vorstehenden Anteile in Masse-% beziehen sich auf die Anteile der jeweiligen Stoffe an der Gesamtmasse der zweiten Komponente.

Nach einer Ausführungsform ist vorgesehen, den Versatz während der Temperaturbeaufschlagung, insbesondere während des keramischen Brandes zu nitrieren. Diese Nitrierung kann insbesondere durchgeführt werden, indem der Versatz während der Beaufschlagung mit Temperatur zusätzlich mit einem Stickstoff (N₂) umfassenden Gas beaufschlagt wird. Da eine nennenswerte Nitrierung des Aluminium (Al) oder eines Aluminium umfassenden Stoffes der zweiten Komponente ab 950°C eintritt (Bildung von AlN) und insbesondere ab 1.200°C (Bildung von AlN-Polytypoid), kann erfindungsgemäß insbesondere vorgesehen sein, den Versatz bei einer Temperaturbeaufschlagung oberhalb von 950°C und insbesondere oberhalb von 1.200°C zu nitrieren. Verfahren zur Nitrierung von Versätzen zur Herstellung von feuerfesten Werkstoffen sind aus dem Stand der Technik bekannt, so dass auf diese Verfahren zurückgegriffen werden kann (siehe hierzu auch [1] Wang X., Wang H., Zhang B., Hong Y., Sun J.: "Synthesis mechanism of MgAlON in nitridation reaction process". Rare Metal Materials and Engineering, Vol. 34 [1], pp 42-45 (2005) Wang X.T.; [2] Wang H.Z., Zhang W.J., Sun J., Hong Y.R: "Synthesis of MgAlON from Al-Al2O3-MgO by Reaction Sintering". Key Engineering Materials, Vol. 224-226, pp 373-378 (2002); [3] Wang X., Zhang W., Wang H.: "Nitridation reaction sintering behaviour of AL-Al2O3-MgO system". Naihuo Cailiao, Vol. 35 [6], pp 317-319 (2001)).

Eine solche Nitrierung des Versatzes kann insbesondere dann vorgesehen sein, wenn die Stoffe der zweiten Komponente keine Stickstoff umfassenden Stoffe umfassen oder die Stoffe des zweiten Versatzes Stickstoff nicht in einer für die Bildung von MgSiAlON-Polytypoid oder MgAlON-Polytypoid in der Bindephase gewünschten Menge zur Verfügung stellen.

Bevorzugt umfasst die zweite Komponente ausschließlich oder zumindest vorwiegend die vorbezeichneten Stoffe. Nach einer Ausführungsform ist vorgesehen, dass die zweite Komponente neben den vorbezeichneten Stoffen weitere Stoffe in einem Anteil unter 10 Masse-% aufweist, also beispielsweise auch in einem Anteil unter 5 oder unter 2 oder unter 1 Masse-%, jeweils bezogen auf die Gesamtmasse der zweiten Komponente.

Nach einer besonders bevorzugten Ausführungsform umfasst die zweite Komponente in dem zur Verfügung gestellten Versatz, also vor der Temperaturbeaufschlagung und insbesondere vor der Durchführung des keramischen Brandes, keinen AlN-Polytypoid, also keinen MgAlON-Polytypoid und keinen MgSiAlON-Polytypoid. Vielmehr kann erfindungsgemäß vorgesehen sein, dass sich MgAlON-Polytypoid oder MgSiAlON-Polytypoid ausschließlich während der Temperaturbeaufschlagung in-situ durch die zweite Komponente in der Bindephase ausbildet. Erfindungsgemäß hat sich herausgestellt, dass durch eine solche in-situ Bildung von MgAlON-Polytypoid oder MgSiAlON-Polytypoid während des keramischen Brandes ein feuerfester Werkstoff mit verbesserten feuerfesten Eigenschaften gegenüber einem feuerfesten Werkstoff ausbildbar ist, bei dem der Versatz bereits vor Durchführung des keramischen Brandes MgAlON-Polytypoid oder MgSiAlON-Polytypoid umfasst. Ein weiterer Vorteil der in-situ Bildung von MgAlON-Polytypoid oder MgSiAlON-Polytypoid während des keramischen Brandes liegt darin, dass hierdurch Energie einsparbar ist, da MgAlON-Polytypoid oder MgSiAlON-Polytypoid nicht bereits zuvor in einem separaten Brennvorgang zu erstellen ist.

Nach einer alternativen Ausführungsform umfasst die zweite Komponente in dem zur Verfügung gestellten Versatz, also vor der Temperaturbeaufschlagung und insbesondere vor der Durchführung des keramischen Brandes, bereits MgAlON-Polytypoid oder MgSiAlON-Polytypoid.

Von Bedeutung für den Erfolg der Erfindung ist es, dass die erste Komponente und die zweite Komponente in einer unterschiedlichen Korngröße im Versatz vorliegen, wobei die erste Komponente eine Grobfraktion und die zweite Komponente eine Feinfraktion bildet. Die erste Komponente liegt insoweit in einer gröberen Korngröße als die zweite Komponente vor beziehungsweise ist die mittlere Korngröße der ersten Komponente größer als die mittlere Korngröße der zweiten Komponente.

Nach einem Ausführungsbeispiel kann vorgesehen sein, dass die zweite Komponente zu wenigstens 90 Masse-%, also beispielsweise auch zu wenigstens 95, 98 oder 99 Masse-% oder auch zu 100 Masse-% eine Korngröße unter 63 µm aufweist, jeweils bezogen auf die Gesamtmasse der zweiten Komponente. Es kann vorgesehen sein, dass der D₅₀-Wert der zweiten Komponente im Bereich von 0,1 - 15µm liegt. Sofern die zweite Komponente einen Stoff in Form von Silizium (Siliziumpulver) zur Ausbildung von MgSiAlON-Polytypoid in der Bindephase umfasst, kann vorgesehen sein, dass der D₅₀-Wert für die Stoffe der zweiten Komponente mit Ausnahme von Silizium im Bereich von 0,1 - 4µm liegt; der D₅₀-Wert für Silizium kann beispielsweise im Bereich von 5 - 20µm liegen.

Es kann beispielsweise vorgesehen sein, dass die erste Komponente zu wenigstens 90 Masse-%, also beispielsweise auch zu wenigstens 95, 98 oder 99 Masse-% oder auch zu 100 Masse-% eine Korngröße von nicht unter 63 µm aufweist. Gemäß einem weiteren Aspekt der Erfindung kann vorgesehen sein, dass die erste Komponente zu wenigstens 30 Masse-%, also beispielsweise auch zu wenigstens 35, 40, 50, 60, 70, 80, 90 Masse-% oder auch zu 100 Masse-% in einer Korngröße von nicht unter 1 mm vorliegt. Die vorstehenden Angaben in Masse-% beziehen sich jeweils auf die Gesamtmasse der ersten Komponente.

Soweit die zweite Komponente Stoffe umfasst, aus denen unter Temperaturbeaufschlagung eine MgAlON-Polytypoid umfassende Bindephase ausbildbar ist, kann die erste Komponente im Bereich der Korngrößen 0,063 - 1mm, 1 - 3mm und 3 - 5 mm im Bereich der folgenden Massenanteile vorliegen, jeweils bezogen auf die Gesamtmasse der ersten Komponente:
> 3 - 5mm: mindestens 10 Masse-%, höchstens 30 oder 40 Masse-%;
> 1 - 3 mm: mindestens 20 Masse-%, höchstens 70 oder 80 Masse-%;
0,063 - 1mm: 0 oder mindestens 1 Masse-%, höchstens 55 Masse-%.

Soweit die zweite Komponente Stoffe umfasst, aus denen unter Temperaturbeaufschlagung eine MgSiAlON-Polytypoid umfassende Bindephase ausbildbar ist, kann die erste Komponente im Bereich der Korngrößen 0,063 - 0,1mm, 0,1 - 1mm, 1 - 3mm und 3 - 5 mm im Bereich der folgenden Massenanteile vorliegen, jeweils bezogen auf die Gesamtmasse der ersten Komponente:
> 3 - 5mm: mindestens 14 oder 18 Masse-%, höchstens 50 oder 60 Masse-%;
> 1 - 3mm: mindestens 5 Masse-%, höchstens 70 oder 80 Masse-%;
> 0,1 - 1mm: 0 oder mindestens 1 Masse-%, höchstens 52 oder 55 Masse-%;
0,063 - 1mm: 0 oder mindestens 1 Masse-%, höchstens 30 oder 35 Masse-%.

Allgemein kann die erste Komponente, soweit die zweite Komponente Stoffe umfasst, aus denen unter Temperaturbeaufschlagung eine MgSiAlON-Polytypoid umfassende Bindephase ausbildbar ist, im Bereich der Korngröße 0,063 - 1mm im Bereich der folgenden Massenanteile vorliegen, bezogen auf die Gesamtmasse der ersten Komponente:
0,063 - 1 mm: 0 oder mindestens 1 Masse-%, höchstens 52, 55, 57 oder 60 Masse-%. Für die Korngröße im Bereich > 1mm können die vorstehenden Werte gelten.

Die erste Komponente umfasst die Stoffe Magnesia (Magnesiumoxid, MgO) oder Magnesia-Spinell (MgO·Al₂O₃, MgAl₂O₄) oder Mischungen daraus. Magnesia kann beispielsweise in Form von Schmelzmagnesia, Sintermagnesia oder Mischungen daraus vorliegen. Bevorzugt liegt Magnesia in Form von Sintermagnesia in der ersten Komponente vor.

Soweit sowohl die erste Komponente als auch die zweite Komponente Magnesia und/oder Magnesia-Spinell umfassen, werden diese Stoffe zur ersten Komponente gerechnet, soweit sie in einer Korngröße von 63 µm und darüber vorliegen und zur zweiten Komponente gerechnet, soweit sie in einer Korngröße unter 63 µm vorliegen.

Bezogen auf die Gesamtmasse des Versatzes, kann die erste Komponente beispielsweise in einem Massenanteil von wenigstens 50 Masse-% im Versatz vorliegen. Ferner kann die erste Komponente beispielsweise in einem Massenanteil von höchstens 95 Masse-% im Versatz vorliegen.

Wiederum bezogen auf die Gesamtmasse des Versatzes, kann die zweite Komponente beispielsweise in einem Massenanteil von wenigstens 5 % im Versatz vorliegen. Ferner kann die zweite Komponente beispielsweise in einem Massenanteil von höchstens 50 Masse-% im Versatz vorliegen. Soweit die zweite Komponente Stoffe umfasst, durch die bei Beaufschlagung mit Temperatur eine MgSiAlON-Polytypoid umfassende Bindephase ausbildbar ist, kann die zweite Komponente in Massenanteilen von wenigstens 5, 8, 10, 12 oder 14 Masse-% im Versatz vorliegen. Ferner kann die zweite Komponente bei dieser Ausführungsform der Erfindung beispielsweise in Massenanteilen von höchstens 50, 40, 30, 20, 18 oder 16 Masse-% im Versatz vorliegen. Die vorgemachten Angaben beziehen sich wiederum auf die Gesamtmasse des Versatzes.

Soweit die zweite Komponente Stoffe umfasst, durch die bei Beaufschlagung mit Temperatur eine MgAlON-Polytypoid umfassende Bindephase ausbildbar ist, kann die zweite Komponente in Massenanteilen von wenigstens 5, 10, 15, 20 oder 23 Masse-% im Versatz vorliegen. Ferner kann die zweite Komponente bei dieser Ausführungsform der Erfindung beispielsweise in Massenanteil von höchstens 50, 40, 30 oder 27 Masse-% im Versatz vorliegen. Die vorgemachten Angaben beziehen sich wiederum auf die Gesamtmasse des Versatzes.

Neben der ersten Komponente und der zweiten Komponente kann der Versatz noch weitere Komponenten aufweisen. Bei diesen weiteren Komponenten kann es sich beispielsweise um Stoffe handeln, die als Verunreinigungen in den Stoffen der ersten oder zweiten Komponente enthalten sind und über diese mit in den Versatz eingetragen werden. In einem gewissen Rahmen ist die Anwesenheit solcher weitere Komponenten für den Erfolg der vorliegenden Erfindung unschädlich. So kann beispielsweise vorgesehen sein, dass solche weiteren Komponenten in Anteilen von bis zu 10 Masse-%, also beispielsweise auch in Anteilen von bis zu 7, 5, 3, 2 oder 1 Masse-% im Versatz vorliegen. In Hinblick auf einige Stoffe hat sich jedoch herausgestellt, dass diese schädlich für den Erfolg der Erfindung sind, insbesondere beispielsweise calciumhaltige Komponenten, insbesondere CaO, und chlorhaltige Komponenten. So kann beispielsweise CaO, das insbesondere durch eine Verunreinigung der Magnesia oder des Magnesia-Spinells in den Versatz eingebracht werden kann, verantwortlich sein für die Bildung von Nebenphasen in der Bindephase, beispielsweise unerwünschte Nebenphasen in Form von Glasphase oder Mayenit (Ca₁₂Al₁₄O₃₃). Sofern neben CaO ferner chlorhaltige Stoffe als weitere Komponenten im Versatz vorliegen, kann sich als weitere unerwünschte Nebenphase Brearleyit (Ca₁₂Al₁₄O₃₂Cl₂) bilden.

Um den Gehalt an unerwünschten Nebenphasen in der Bindephase möglichst gering halten zu können, kann erfindungsgemäß bevorzugt vorgesehen sein, dass der Gehalt an CaO im Versatz unter 5 Masse-% liegt, also beispielsweise auch unter 3, 2, 1 oder unter 0,75 Masse-%, jeweils bezogen auf die Gesamtmasse des Versatzes.

In Hinblick auf den Chlorgehalt kann vorgesehen sein, dass dieser Gehalt im Versatz unter 3 Masse-% liegt, also beispielsweise auch unter 2 oder unter 1,5 Masse-%, wiederum jeweils bezogen auf die Gesamtmasse des Versatzes.

Weitere unerwünschte Stoffe im Versatz sind Chromoxid sowie Eisenoxid. Erfindungsgemäß kann vorgesehen sein, dass der Gehalt an Chromoxid im Versatz (angegeben als Cr₃O₄) unter 1 Masse-% liegt, also beispielsweise auch unter 0,5 oder unter 0,3 Masse-%. Der Gehalt an Eisenoxid im Versatz (angegeben als Fe₂O₃) kann beispielsweise unter 2 % liegen, also beispielsweise auch unter 1,5 oder unter 1 oder unter 0,6 Masse-%. Die vorgemachten Angaben sind wiederum bezogen auf die Gesamtmasse des Versatzes.

Erfindungsgemäß ist der Versatz der vorliegenden Erfindung derart konfektioniert, dass die zweite Komponente Stoffe umfasst, durch die bei Beaufschlagung mit Temperatur eine AlN-Polytypoid umfassende Bindephase ausbildbar ist. Diese Bindephase bildet eine Matrix, in die die Stoffe der ersten Komponente eingelagert sind beziehungsweise die die Stoffe der ersten Komponente umgibt.

Der durch das erfindungsgemäße Verfahren hergestellte feuerfeste Werkstoff bildet damit ein Gefüge aus Körnern beziehungsweise Grobkorn aus wenigstens einem der folgenden Stoffe: Magnesia oder Magnesia-Spinell aus, wobei diese Körner von einer Bindephase umgeben sind, die AlN-Polytypoid umfasst.

Bezogen auf den feuerfesten Werkstoff kann der Anteil an den Körnern beispielsweise im Bereich von 95-50 Masse-% und der Anteil an Bindephase im Bereich von 5-50 Masse-% liegen.

Soweit die Bindephase in dem nach dem erfindungsgemäßen Verfahren hergestellten feuerfesten Werkstoff MgSiAlON-Polytypoid umfasst, kann der Anteil an Bindephase im feuerfesten Werkstoff beispielsweise wenigstens 5 Masse-% betragen, also beispielsweise auch wenigstens 8, 10, 12 oder 14 Masse-%. Ferner kann der Anteil an Bindephase im feuerfesten Werkstoff beispielsweise höchstens 50 Masse-% betragen, also beispielsweise auch höchstens 40, 30, 20, 18 oder 16 Masse-%. Die vorgemachten Angaben sind jeweils bezogen auf die Gesamtmasse des feuerfesten Werkstoffs.

Soweit die Bindephase des nach dem erfindungsgemäßen Verfahren hergestellten feuerfesten Werkstoffs MgAlON-Polytypoid umfasst, kann der Anteil an Bindephase im feuerfesten Werkstoff beispielsweise wenigstens 5 Masse-% betragen, also auch beispielsweise wenigstens 10, 15, 20 oder 23 Masse-%. Ferner kann der Anteil an einer solchen Bindephase im feuerfesten Werkstoff höchstens 50 Masse-% betragen, also beispielsweise auch höchstens 40, 30 oder 27 Masse-%. Die vorgemachten Angaben sind jeweils bezogen auf die Gesamtmasse des feuerfesten Werkstoffs.

Gegenstand der Erfindung ist auch ein feuerfester Werkstoff, der insbesondere gemäß dem erfindungsgemäßen, hierin beschriebenen Verfahren hergestellt sein kann und die hierin beschriebenen Eigenschaften aufweist.

Soweit die Bindephase im feuerfesten Werkstoff MgSiAlON-Polytypoid umfasst, kann der Anteil an MgSiAlON-Polytypoid in der Bindephase beispielsweise im Bereich von 30 - 100 Masse-% liegen. Besonders bevorzugt liegt der Anteil an MgSiAlON-Polytypoid in der Bindephase im Bereich von 60 - 95 Masse-%. Die vorgemachten Angaben sind jeweils bezogen auf die Gesamtmasse der Bindephase.

Soweit die Bindephase im feuerfesten Werkstoff MgAlON-Polytypoid umfasst, kann der Anteil an MgAlON-Polytypoid in der Bindephase beispielsweise im Bereich von 10 - 100 Masse-% liegen. Besonders bevorzugt liegt der Anteil an MgAlON-Polytypoid in der Bindephase im Bereich von 25 - 80 Masse-%. Die vorgemachten Angaben sind jeweils bezogen auf die Gesamtmasse der Bindephase.

Neben AlN-Polytypoid in Form von MgSiAlON-Polytypoid oder MgAlON-Polytypoid kann die Bindephase des feuerfesten Werkstoffs insbesondere noch wenigstens eine der folgenden weiteren Stoffe beziehungsweise Phasen umfassen: Magnesia, Magnesia-Spinell, Glasphase, Mayenit oder Brearleyit. Es kann vorgesehen sein, dass die Bindephase neben AlN-Polytypoid und gegebenenfalls einem oder mehreren der vorgenannten Stoffe keine weiteren Stoffe aufweist oder solch weitere Stoffe allenfalls in Massenanteilen von unter 10 Masse-%, bevorzugt unter 5, 3, 2 oder 1 Masse-%, jeweils bezogen auf die Gesamtmasse der Bindephase. Der Anteil an Glasphase in der Bindephase liegt bevorzugt unter 3 Masse-%, besonders bevorzugt unter 2 Masse-% oder unter 1 Masse-%. Der Anteil an Mayenit und Brearleyit liegt bevorzugt jeweils unter 3 Masse-%, besonders bevorzugt unter 2 oder unter 1 Masse-%. Die vorgemachten Angaben sind jeweils bezogen auf die Gesamtmasse der Bindephase.

Die gemäß der vorliegenden Erfindung hergestellten feuerfesten Werkstoffe zeichnen sich durch hervorragende feuerfeste Eigenschaften aus. Dies ist insbesondere auch darauf zurückzuführen, dass die Körner der ersten Komponente wesentlich fester in die Bindephase eingebunden sind beziehungsweise über die Bindephase fester miteinander versintert sind als bei einem gemäß dem Stand der Technik drucklos gesinterten Werkstoff. So liegen bei den feuerfesten Werkstoffen gemäß der vorliegenden Erfindung mit zunehmendem Druck zunehmend weniger Risse oder Abstände im Kontaktbereich zwischen Bindephase und den Körnern der ersten Komponente vor, bis diese praktisch völlig verschwinden, beispielsweise bei einem Druck im Bereich von 30 MPa. Ab einem Druck von etwa 10 MPa stehen die Körner der ersten Komponente an den Kontaktbereichen mit der Bindephase weitgehend und bei weiter steigendem Druck praktisch vollflächig in Kontakt mit der Bindephase. Die gute Einbindung der Körner der ersten Komponente in die Bindephase ist insbesondere darauf zurückzuführen, dass der Werkstoff während seines Brandes erfindungsgemäß mit Druck beaufschlagt worden ist.

Vergleiche des erfindungsgemäßen feuerfesten Werkstoffs mit feuerfesten Werstoffen, deren Bindephase ebenfalls AlN-Polytypoid umfasst, die während des Brandes jedoch nicht Druck beaufschlagt wurden, haben gezeigt, dass die Eigenschaften dieser letzteren Werkstoffe nicht zufriedenstellend sind. So ist das Grobkorn gar nicht oder kaum in die Matrix der Bindephase eingebunden. Es gibt keine nennenswerte Versinterung des Grobkorns über die Bindephase, und im Kontaktbereich zwischen Bindephase und Grobkorn treten weite Risse oder Abstände auf.

Gegenüber solchen feuerfesten Werkstoffen nach dem Stand der Technik zeichnen sich die erfindungsgemäß hergestellten feuerfesten Werkstoffe durch charakteristisch verbesserte Eigenschaften aus.

So kann die Kaltdruckfestigkeit eines feuerfesten Werkstoffs gemäß der Erfindung sehr hoch sein bei einem gleichzeitig verhältnismäßig niedrigen Elastizitätsmodul. Hieraus ergeben sich hervorragende Festigkeitseigenschaften des feuerfesten Werkstoffs bei einer gleichzeitig sehr geringen Sprödigkeit. Bei auf Magnesia, insbesondere Sintermagnesia, oder Magnesia-Spinell basierenden feuerfesten Werkstoffen nach dem Stand der Technik korreliert die Höhe der Kaltdruckfestigkeit regelmäßig mit der Höhe des Elastizitätsmoduls, so dass solch feuerfeste Werkstoffe mit einer hohen Kaltdruckfestigkeit aufgrund eines hohen Elastizitätsmoduls gleichzeitig auch eine hohe Sprödigkeit aufweisen. Die Kaltdruckfestigkeit des feuerfesten Werkstoffs gemäß der vorliegenden Erfindung ist jedoch sehr hoch und liegt über 40 MPa, also beispielsweise auch über 80 MPa, 120 MPa oder über 150 MPa. Der Elastizitätsmodul eines feuerfesten Werkstoffs gemäß der vorliegenden Erfindung kann jedoch verhältnismäßig gering sein und insbesondere unter 80 GPa liegen, also beispielsweise auch unter 70 oder unter 60 GPa. Insbesondere können die feuerfesten Werkstoffe gemäß der vorliegenden Erfindung die vorstehenden Werte für Kaltdruckfestigkeit und Elastizitätsmodul gleichzeitig aufweisen.

Charakteristisch für nach dem erfindungsgemäßen Verfahren hergestellte feuerfeste Werkstoffe sowie für die erfindungsgemäßen feuerfesten Werkstoffe auf Basis Magnesia oder Magnesia-Spinell mit einer AlN-Polytypoid umfassenden Bindephase ist insbesondere der verhältnismäßig hohe Wert der Kaltdruckfestigkeit sowie die geringe Porosität. So liegen die Werte für Kaltdruckfestigkeit für die feuerfesten Werkstoffe nach der Erfindung regelmäßig deutlich über den entsprechenden Werten von gemäß dem Stand der Technik drucklos gesinterten feuerfesten Werkstoffen sowie die Werte für die Porosität für die feuerfesten Werkstoffe nach der Erfindung regelmäßig deutlich unter den entsprechenden Werten von gemäß dem Stand der Technik drucklos gesinterten feuerfesten Werkstoffen. So ist die Kaltdruckfestigkeit von feuerfesten Werkstoffen auf Basis Magnesia oder Magnesia-Spinell mit einer AlN-Polytypoid umfassenden Bindephase, die gemäß dem Stand der Technik drucklos gesintert wurden, regelmäßig so niedrig, dass diese nur in einem sehr begrenzten Umfang verwendbar sind. Regelmäßig liegt die Kaltdruckfestigkeit für solch feuerfeste Werkstoffen nach dem Stand der Technik unter 40 MPa, und insbesondere regelmäßig auch unter 20 MPa. Im Gegensatz dazu liegt die Kaltdruckfestigkeit für nach dem erfindungsgemäßen Verfahren hergestellte feuerfeste Werkstoffe, wie oben ausgeführt, über 40 MPa. Ferner liegt die Porosität für solch feuerfeste Werkstoffe nach dem Stand der Technik stets über 13 % und regelmäßig auch über 15 %. Im Gegensatz dazu liegt die Porosität für nach dem erfindungsgemäßen Verfahren hergestellte feuerfeste Werkstoffe stets unter 15 % und regelmäßig auch unter 13 %. Ferner weisen die feuerfesten Werkstoffe gemäß der vorliegenden Erfindung aufgrund der guten Versinterung beziehungsweise der guten Einbindung der Körner der ersten Komponente in die Bindephase eine hohe Dichte und die oben besagte geringe Porosität auf, woraus ein gutes Korrosionsverhalten und insbesondere eine gute Oxidations- und Infiltrationsbeständigkeit resultiert. Die gute Oxidationsbeständigkeit wird auch durch die Bildung einer oxidischen Schutzschicht bei den erfindungsgemäßen Erzeugnissen, und die Infiltrationsbeständigkeit durch die geringe Benetzbarkeit des vorhandenen Stickstoffs erhöht. Die oxidische Schutzschicht bildet sich auf einem erfindungsgemäßen feuerfesten Werkstoff aus, während dieser bei Temperaturbeauschlagung einer oxidierenden Atmosphäre ausgesetzt wird. Diese oxidische Schutzschicht behindert oder verlangsamt eine weitere Oxidation des Werkstoffs. Die oxidische Schutzschicht besteht bei MgAlON-Polytypoid umfassender Bindephase aus Spinell und Mayenit (beziehungsweise Brearleyit) und bei MgSiAlON-Polytypoid umfassender Bindephase aus Spinell, Monticellit sowie, insbesondere unterhalb der Oberfläche der Schutzschicht, aus Forsterit.

So kann die Rohdichte der erfindungsgemäßen feuerfesten Werkstoffe insbesondere über 2,8 g/cm³ liegen, also beispielsweise auch über 2,9 oder 2,95 oder 3,0 g/cm³.

Ferner kann die Porosität der erfindungsgemäßen feuerfesten Werkstoffe unter 15 % liegen, also beispielsweise auch unter 14 oder 13 %.

Die Kaltdruckfestigkeit kann insbesondere bestimmt sein gemäß ÖNORM EN 993-5:1998.

Der Elastizitätsmodul kann insbesondere bestimmt sein gemäß den Angaben in der folgenden Literaturstelle: G. Robben, B. Bollen, A. Brebels, J van Humbeeck, O. van der Biest: "Impulse excitation apparatus to measure resonant frequencies, elastic module and internal friction at room and high temperature", Review of Scientific Instruments, Vol. 68, pp. 4511-4515 (1997).

Die Rohdichte kann insbesondere bestimmt sein gemäß ÖNORM EN 993-2:1995+A1:2003.

Die Porosität kann insbesondere bestimmt sein gemäß ÖNORM EN 993-1:1995.

Die feuerfesten Werkstoffe der vorliegenden Erfindung können grundsätzlich für alle Einsatzzwecke verwendet werden, bei denen auf Magnesia und/oder Magnesia-Spinell basierende feuerfeste Werkstoffe mit guten feuerfesten Eigenschaften benötigt werden. Beispielsweise können die feuerfesten Werkstoffe der vorliegenden Erfindung in der Stahlerzeugung, in Stranggussanlagen oder in Industrieöfen verwendet werden.

Nachfolgend werden erfindungsgemäße Verfahren sowie erfindungsgemäße feuerfeste Werkstoffe anhand von Ausführungsbeispielen näher erläutert.

### Beispiel 1:

Gemäß einem ersten Ausführungsbeispiel wurde ein erfindungsgemäßes Verfahren durchgeführt, wobei die zweite Komponente Stoffe umfasste, durch die bei Beaufschlagung mit Temperatur eine MgSiAlON-Polytypoid umfassende Bindephase ausbildbar ist.

Die erste Komponente des Versatzes umfasste Sintermagnesia mit einer Korngröße im Bereich von 63 µm bis 5 mm. Die verwendete Magnesia wies eine Reinheit von 98,4 Masse-% auf. Als Verunreinigung wies die verwendete Magnesia unter anderem CaO mit einem Massenanteil von 0,75 Masse-% auf, bezogen auf die verwendete Magnesia.

Die zweite Komponente umfasste Stoffe, durch die bei Beaufschlagung mit Temperatur ab etwa 1.400°C eine MgSiAlON-Polytypoid umfassende Bindephase ausbildbar ist. Dabei umfasste die zweite Komponente die folgenden Stoffe: Magnesia-Spinell, Si₃N₄, AlN, Al₂O₃, Si sowie MgO. Die Stoffe der zweiten Komponente lagen ausschließlich in einer Korngröße unter 63 µm vor.

Die Massenanteile der einzelnen Stoffe der ersten und zweiten Komponente am Versatz sowie die Kornfraktionen der ersten Komponente sind in der nachfolgenden Tabelle 1 angegeben.

**Tabelle 1**

| Stoff | | Anteil [Masse-%] (bezogen auf die Gesamtmasse des Versatzes) |
|---|---|---|
| Erste Komponente | MgO > 3 - 5mm | 19,6 |
| | MgO > 1 - 3mm | 25,8 |
| | MgO > 0,1 - 1mm | 35,6 |
| | MgO 63-100 µm | 4,9 |
| Zweite Komponente | MgAl₂O₄ | 4,9 |
| | Si₃N₄ | 0,4 |
| | AlN | 2,2 |
| | Al₂O₃ | 1,8 |
| | Si | 1,0 |
| | MgO | 3,8 |

Dem vorstehenden Versatz wurde ein temporäres Bindemittel in Form von Isopropanol zugegeben und der Versatz anschließend gemischt. Anschließend wurden aus dem Versatz Grünkörper durch Pressen geformt. Die Grünkörper wurden anschließend bei einer Temperatur von etwa 100°C getrocknet. Die getrockneten Grünkörper wurden jeweils in eine Graphitform gegeben, die für ein uniaxiales Heißpressen geeignet ist.

Anschließend wurden die Grünkörper in einem Graphitofen in einer Stickstoffatmosphäre bis auf eine Temperatur von etwa 1.620°C aufgeheizt und etwa 60 Minuten auf dieser Temperatur gehalten. Während die Grünkörper auf dieser Temperatur gehalten wurden, bildeten die Stoffe der zweiten Komponente MgSiAlON-Polytypoid umfassende Bindephase aus. Gleichzeitig wurden die Grünkörper, während sie durch diese Temperatur beaufschlagt wurden, durch uniaxiales Heißpressen in der Graphitform mit einem Druck von 10 beziehungsweise 30 MPa beaufschlagt.

Nach Abkühlung wurden feuerfeste Werkstoffe in Form geformter Erzeugnisse mit den in Tabelle 2 angegebenen Phasen erhalten.

**Tabelle 2**

| Phase | Anteil [Masse-%] (bezogen auf die Gesamtmasse des feuerfesten Werkstoffs) | |
|---|---|---|
| Grobkorn | MgO | 86,9 |
| Bindephase | Glasphase | 1,7 |
| | MgSiAlON | 7,7 |
| | Magnesia-Spinell | 3,7 |

Die Werkstoffe weisen physikalische Eigenschaften auf, wie sie in der nachfolgenden Tabelle 3 angegeben sind. Dabei bezeichnet W0 einen Vergleichswerkstoff, der gemäß diesem Ausführungsbeispiel 1 hergestellt wurde mit dem Unterschied, dass er während des Beaufschlagens mit Temperatur nicht erfindungsgemäß mit Druck beaufschlagt wurde. Mit W1 und W2 sind gemäß dem vorbeschriebenen Ausführungsbeispiel hergestellte feuerfeste Werkstoffe bezeichnet ist, wobei der Werkstoff W1 während des Beaufschlagens mit Temperatur mit einem Druck von 10 MPa beaufschlagt wurde, während der Werkstoff gemäß W2 mit einem Druck von 30 MPa beaufschlagt wurde.

**Tabelle 3**

| Eigenschaft | W0 | W1 | W2 |
|---|---|---|---|
| Kaltdruckfestigkeit [MPa] | 11,45 | 48,13 | 193,95 |
| Elastizitätsmodul [GPa] | 1,7 | 18,82 | 42,77 |
| Porosität [%] | 21,06 | 12,25 | 4,96 |
| Rohdichte [g ·cm⁻³] | 2,72 | 3,04 | 3,30 |

### Beispiel 2:

Gemäß einem zweiten Ausführungsbeispiel wurde ein erfindungsgemäßes Verfahren durchgeführt, wobei die zweite Komponente Stoffe umfasste, durch die bei Beaufschlagung mit Temperatur eine MgAlON- Polytypoid umfassende Bindephase ausbildbar ist.

Die erste Komponente des Versatzes umfasste Sintermagnesia mit einer Korngröße im Bereich von 63 µm bis 5 mm. Chemisch entsprach die verwendete Magnesia der Magnesia gemäß Ausführungsbeispiel 1.

Die zweite Komponente umfasste Stoffe, durch die bei Beaufschlagung mit Temperatur ab etwa 1.400°C eine MgAlON- Polytypoid umfassende Bindephase ausbildbar ist. Dabei umfasste die zweite Komponente die folgenden Stoffe: MgO, AlN sowie Al₂O₃. Die Stoffe der zweiten Komponente lagen ausschließlich in einer Korngröße unter 63 µm vor. Die Massenanteile der einzelnen Stoffe der ersten und zweiten Komponente am Versatz sowie die Kornfraktionen der ersten Komponente sind in der nachfolgenden Tabelle 4 angegeben.

**Tabelle 4**

| Stoff | | Anteil [Masse-%] (bezogen auf die Gesamtmasse des Versatzes) |
|---|---|---|
| Erste Komponente | MgO > 3 - 5mm | 15,0 |
| | MgO > 1 - 3mm | 35,7 |
| | MgO 0,063 - 1mm | 26,3 |
| Zweite Komponente | AlN | 3,5 |
| | Al₂O₃ | 9,0 |
| | MgO | 10,5 |

Das Verfahren zur Herstellung eines feuerfesten Werkstoffs aus dem Versatz gemäß Tabelle 4 entsprach dem oben beschriebenen Ausführungsbeispiel 1 mit dem Unterschied, dass die Grünkörper etwa 60 Minuten auf einer Temperatur von 1.650°C gehalten wurden, während sich MgAlON- Polytypoid umfassende Bindephase ausbildete und währenddessen sie mit Druck beaufschlagt wurden.

Nach Abkühlung wurden feuerfeste Werkstoffe in Form geformter Erzeugnisse mit den in Tabelle 5 angegebenen Phasen erhalten.

**Tabelle 5**

| Phase | Anteil [Masse-%] (bezogen auf die Gesamtmasse des feuerfesten Werkstoffs) | |
|---|---|---|
| Grobkorn | MgO | 71,4 |
| Bindephase | MgAlON | 7,1 |
| | Magnesia-Spinell | 13,3 |
| | MgO | 6,8 |
| | Mayenit | 1,4 |

Die Werkstoffe weisen physikalische Eigenschaften auf, wie sie in der nachfolgenden Tabelle 6 angegeben sind. Dabei bezeichnet W0 wiederum einen Vergleichswerkstoff, während der Werkstoff W3 erfindungsgemäß mit einem Druck von 10 MPa und der Werkstoff W4 erfindungsgemäß mit einem Druck von 30 MPa beaufschlagt wurde.

**Tabelle 6**

| Eigenschaft | W0 | W3 | W4 |
|---|---|---|---|
| Kaltdruckfestigkeit [MPa] | 11,45 | 138,7 | 321,28 |
| Elastizitätsmodul [GPa] | 1,7 | 33,9 | 56,09 |
| Porosität [%] | 21,06 | 10,11 | 3,28 |
| Rohdichte [g ·cm⁻³] | 2,72 | 3,14 | 3,38 |

In Figur 1 ist eine rasterelektronenmikroskopische Aufnahme eines Ausschnitts eines gemäß dem erfindungsgemäßen Verfahren hergestellten feuerfesten Werkstoffs gezeigt, wobei die Bindephase MgSiAlON-Polytypoid umfasst.

In Figur 2 ist eine rasterelektronenmikroskopische Aufnahme eines Ausschnitts eines gemäß dem erfindungsgemäßen Verfahren hergestellten feuerfesten Werkstoffs gezeigt, dessen Bindephase MgAlON-Polytypoid umfasst.

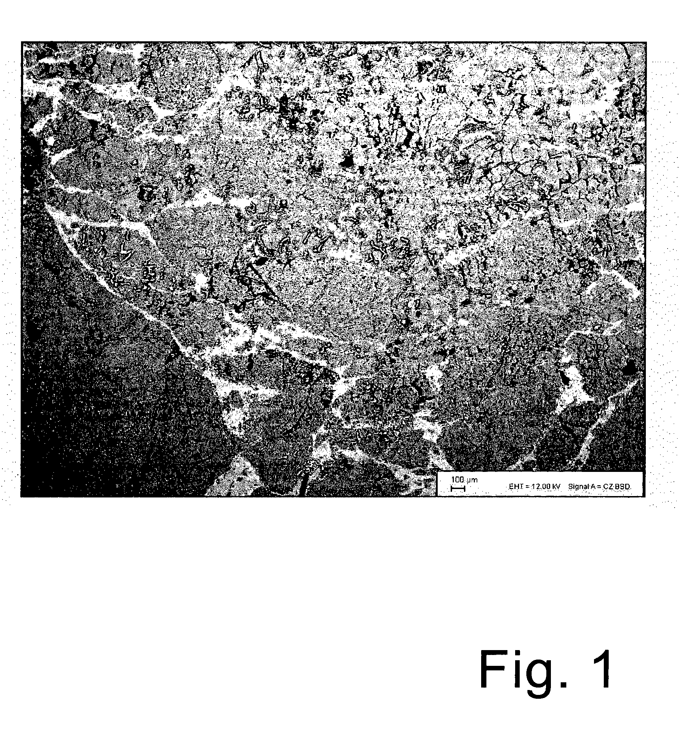

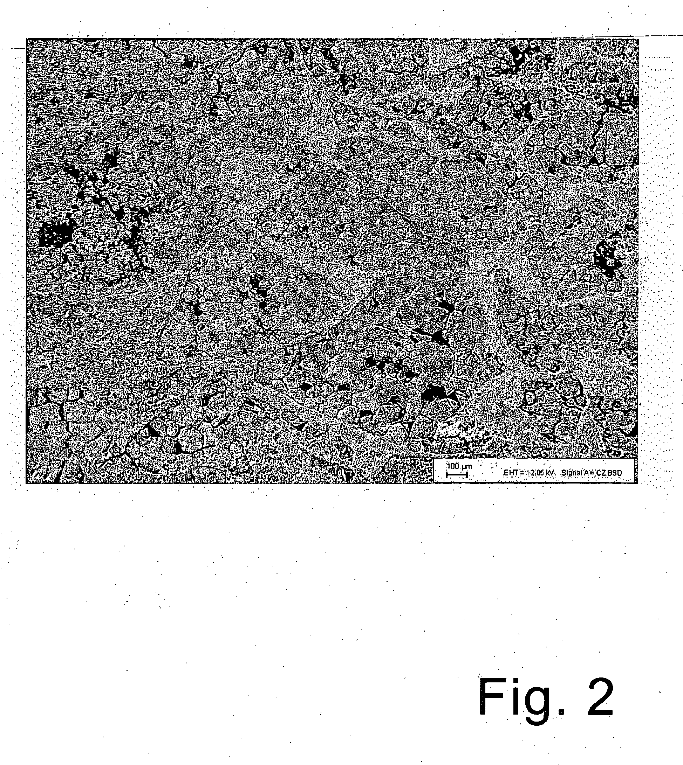

Der schwarze Balken unten rechts in den Aufnahmen gemäß den Figuren 1 und 2 entspricht einer Länge von 100 µm.

Zu erkennen sind in den Aufnahmen die dunkleren Körner aus Magnesia, die in die hellere Bindephase eingebettet sind. Gut zu erkennen ist dabei, dass die Körner ohne Abstand in Kontakt mit der Bindephase stehen und über diese fest miteinander versintert sind. Die feuerfesten Werkstoffe gemäß den Figuren 1 und 2 wurden bei einem Druck von etwa 30 MPa gesintert.

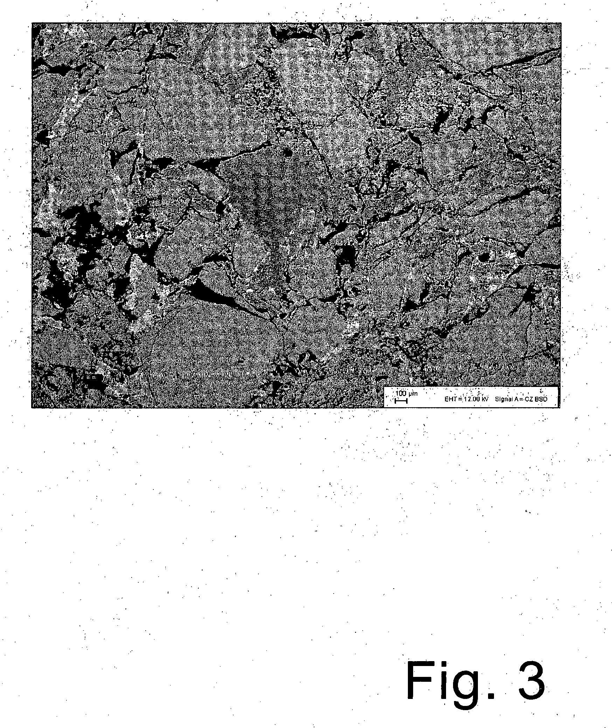

Figur 3 ist eine rasterelektronenmikroskopische Aufnahme eines Ausschnitts eines gemäß dem erfindungsgemäßen Verfahren hergestellten feuerfesten Werkstoffs, dessen Bindephase MgSiAlON-Polytypoid umfasst und der erfindungsgemäß bei einem Druck von etwa 10 MPa gesintert wurde. Die dunkleren Körner aus Magnesia sind wiederum in die hellere Bindephase eingebettet, wobei vereinzelt noch sehr geringe Porenräume um die Körner herum zu erkennen sind. Der schwarze Balken unten rechts in der Aufnahme entspricht einer Länge von 100 µm.

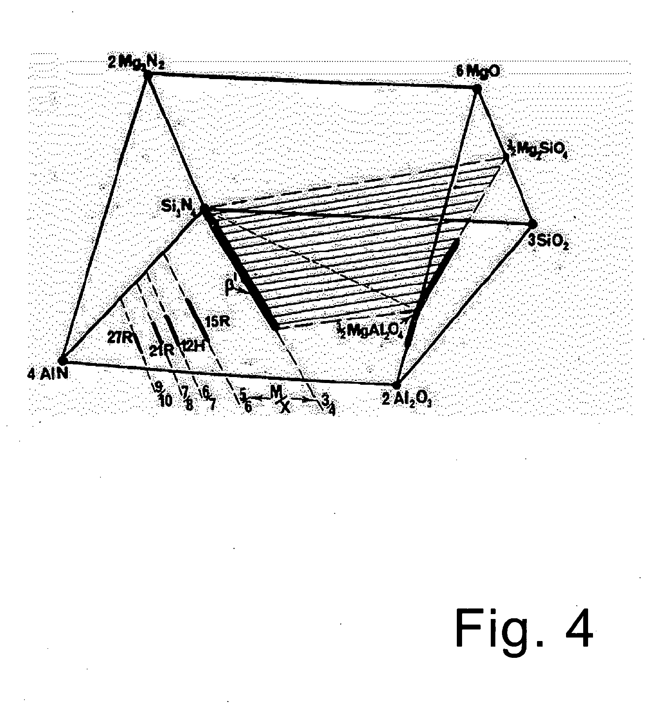

In Figur 4 ist ein MgSiAlON-Polytypoid-Phasendiagramm für die Phasen MgO, Mg₃N₂, AlN, Al₂O₃, SiO2 und Si₃N₄ dargestellt. Die MgSiAlON-Polytypoide sind durch dicke schwarze Linien kenntlich gemacht.

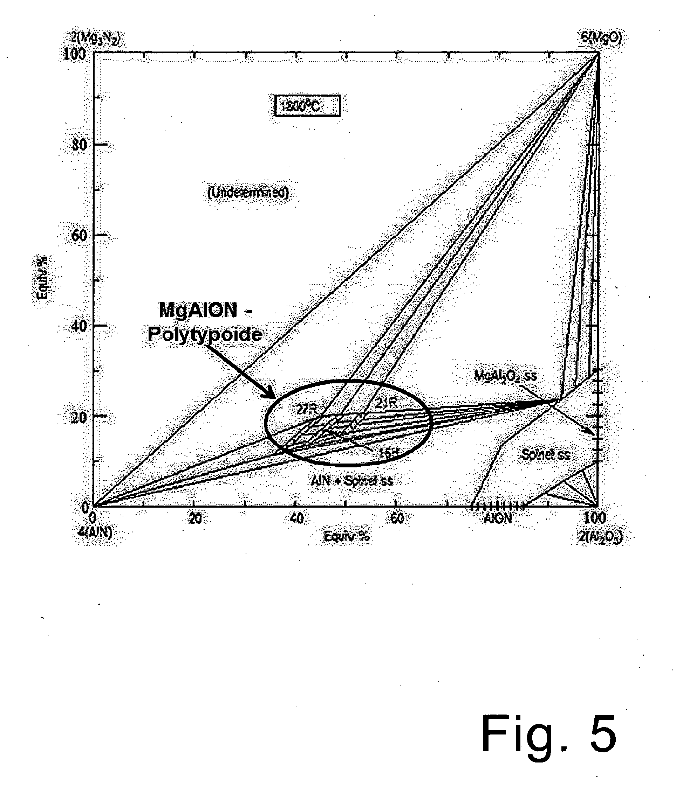

Figur 5 zeigt ein MgAlON- Polytypoid-Phasendiagramm für die Phasen MgO, M_{g3}N₂, AlN und Al₂O₃. Die Lage der MgAlON-Polytypoide darin ist angegeben.

## Patentansprüche

1. Verfahren zur Herstellung eines feuerfesten Werkstoffes auf Basis von Magnesia oder Magnesia-Spinell mit folgenden Schritten:
1.1 Zur Verfügungstellung eines Versatzes, umfassend
1.1.1 eine erste Komponente aus wenigstens einem der folgenden Stoffe: Magnesia oder Magnesia-Spinell;
1.1.2 eine zweite Komponente, umfassend Stoffe, durch die bei Beaufschlagung mit Temperatur eine AlN-Polytypoid umfassende Bindephase ausbildbar ist;
1.2 Beaufschlagen des Versatzes mit Temperatur in einem Temperaturbereich, in dem die zweite Komponente eine AlN-Polytypoid umfassende Bindephase ausbildet; wobei
1.3 der Versatz während des Beaufschlagens mit Temperatur in diesem Temperaturbereich mit Druck beaufschlagt wird.

2. Verfahren nach Anspruch 1, bei dem der Versatz mit Druck über 1 MPa beaufschlagt wird.

3. Verfahren nach wenigstens einem der vorhergehenden Ansprüche, bei dem der Versatz mit einer Temperatur von wenigstens 1.200°C beaufschlagt wird.

4. Verfahren nach wenigstens einem der vorhergehenden Ansprüche, bei dem die zweite Komponente Stoffe umfasst, durch die bei Beaufschlagung mit Temperatur eine Bindephase ausbildbar ist, die einen der folgenden AlN-Polytypoiden aufweist: MgAlON-Polytypoid oder MgSiAlON-Polytypoid.

5. Verfahren nach wenigstens einem der vorhergehenden Ansprüche, bei dem die Komponenten des Versatzes die folgenden Massenanteile aufweisen, bezogen auf die Gesamtmasse des Versatzes:
Erste Komponente: 95 bis 50 Masse-%;
Zweite Komponente: 5 bis 50 Masse-%.

6. Verfahren nach wenigstens einem der vorhergehenden Ansprüche, bei dem die mittlere Korngröße der ersten Komponente größer ist als die mittlere Korngröße der zweiten Komponente.

7. Verfahren nach wenigstens einem der vorhergehenden Ansprüche, bei dem die zweite Komponente zu wenigstens 90 Masse-% eine Korngröße unter 63µm aufweisen.

8. Verfahren nach wenigstens einem der vorhergehenden Ansprüche, bei dem die erste Komponente zu wenigstens 90 Masse-% eine Korngröße über 63 µm aufweisen.

9. Feuerfester Werkstoff, hergestellt durch ein Verfahren nach wenigstens einem der vorhergehenden Ansprüche, dessen Gefüge gebildet ist aus Körnern aus wenigstens einem der folgenden Stoffe: Magnesia oder Magnesia-Spinell, wobei die Körner von einer Bindephase umgeben sind, die AlN-Polytypoid umfasst und mit einer Kaltdruckfestigkeit von wenigstens 40 MPa.

10. Feuerfester Werkstoff nach Anspruch 9 mit einem Massenanteil an den Körnern im Bereich von 95 bis 50 Masse-% und einem Anteil an Bindephase im Bereich von 5 bis 50 Masse-%, jeweils bezogen auf den Werkstoff.

11. Feuerfester Werkstoff nach wenigstens einem der vorhergehenden Ansprüche mit einem Anteil an MgSiAlON-Polytypoid in der Bindephase im Bereich von 30 bis 100 Masse-% oder mit einem Anteil an MgAlON-Polytypoid in der Bindephase im Bereich von 10 bis 100 Masse-%, jeweils bezogen auf die Bindephase.

12. Feuerfester Werkstoff nach wenigstens einem der vorhergehenden Ansprüche mit einem Elastizitätsmodul von nicht über 80 GPa.

13. Feuerfester Werkstoff nach wenigstens einem der vorhergehenden Ansprüche mit einer Rohdichte von wenigstens 2,80 g/cm³.

14. Feuerfester Werkstoff nach wenigstens einem der vorhergehenden Ansprüche mit einer offenen Porosität von nicht über 20 %.

## Claims

1. A method for producing a refractory material based on magnesia or magnesia spinel with the following steps:
1.1 provision of a batch comprising
1.1.1 a first component made of at least one of the following materials: magnesia or magnesia spinel;
1.1.2 a second component comprising substances by means of which a binding phase comprising an AlN Polytypoid can be formed when temperature is applied;
1.2 application of temperature to the batch within a temperature range in which the second component forms a binding phase comprising an AlN polytypoid; wherein
1.3 the batch is exposed to pressure during the application of temperature in this temperature range.

2. The method according to claim 1, wherein the batch is exposed to a pressure of over 1 MPa.

3. The method according to at least one of the preceding claims, wherein the batch is exposed to a temperature of at least 1200 °C.

4. The method according to at least one of the preceding claims, wherein the second component comprises substances by means of which a binding phase can be formed when temperature is applied, which binding phase comprises one of the following AlN polytypoids: MgAlON polytypoid or MgSiAlON-AIN polytypoid.

5. The method according to at least one of the preceding claims, wherein the components of the batch exhibit the following fractions by mass, relative to the total mass of the batch:
First component: 95 to 50 % by mass;
Second component: 5 to 50 % by mass.

6. The method according to one of the preceding claims, wherein the mean grain size of the first component is greater than the mean grain size of the second component.

7. The method according to at least one of the preceding claims, wherein at least 90 % by mass of the second component exhibits a grain size of under 63 µm.

8. The method according to at least one of the preceding claims, wherein at least 90 % by mass of the first component exhibits a grain size of over 63 µm.

9. A refractory material, produced by means of a method according to at least one of the preceding claims, the structure whereof is made up of grains comprising at least one of the following substances: magnesia or magnesia spinel, wherein the grains are surrounded by a binding phase which comprises an AlN polytypoid and having a cold compression resistance of at least 40 MPa.

10. The refractory material according to claim 9 having a mass fraction of grains within the range of 95 - 50 % by mass and a fraction of binding phase within the range of 5 - 50 % by mass relative to the material in each case.

11. The refractory material according to at least one of the preceding claims having a fraction of MgSiAlON polytypoid in the binding phase within the range of 30 - 100 % by mass or having a fraction of MgAlON polytypoid in the binding phase within the range of 10 - 100 % by mass, relative to the binding phase in each case.

12. The refractory material according to at least one of the preceding claims having a modulus of elasticity of no more than 80 GPa.

13. The refractory material according to at least one of the preceding claims having a gross density of at least 2.80 g/cm³.

14. The refractory material according to at least one of the preceding claims having an open porosity of no more than 20 %.

## Revendications

1. Procédé de fabrication d'un matériau réfractaire à base de magnésie ou de spinelle de magnésie, comportant les étapes suivantes :
1.1 Fourniture d'un mélange comprenant
1.1.1 un premier composant constitué d'au moins une des matières suivantes : magnésie ou spinelle de magnésie ;
1.1.2 un deuxième composant comprenant des matières susceptibles de former une phase de liant renfermant du polytypoïde d'AlN lorsqu'elles sont exposées un traitement thermique ;
1.2 exposition dudit mélange à un traitement thermique dans une gamme de températures dans laquelle le deuxième composant forme une phase de liant renfermant du polytypoïde d'AlN ;
1.3 ledit mélange étant exposé, pendant qu'il est exposé à un traitement thermique dans ladite gamme de températures, à une pression.

2. Procédé selon la revendication 1, ledit mélange étant exposé à une pression supérieure à 1 MPa.

3. Procédé selon l'une au moins des revendications précédentes, ledit mélange étant exposé à une température d'au moins 1 200 °C.

4. Procédé selon l'une au moins des revendications précédentes, le deuxième composant comprenant des matières susceptibles de former, lorsqu'elles sont exposées à un traitement thermique, une phase de liant comportant un des polytypoïdes d'AlN suivants : polytypoïde de MgAlON ou polytypoïde de MgSiAlON.

5. Procédé selon l'une au moins des revendications précédentes, les composants dudit mélange ayant les proportions en masse suivantes, par rapport à la masse totale dudit mélange :
premier composant : 95 à 50 % en masse ;
deuxième composant : 5 à 50 % en masse.

6. Procédé selon l'une au moins des revendications précédentes, la granulométrie moyenne du premier composant étant supérieure à la granulométrie moyenne du deuxième composant.

7. Procédé selon l'une au moins des revendications précédentes, la granulométrie du deuxième composant étant, pour au moins 90 % de sa masse, inférieure à 63 µm.

8. Procédé selon l'une au moins des revendications précédentes, la granulométrie du premier composant étant, pour au moins 90 % de sa masse, supérieure à 63 µm.

9. Matériau réfractaire, fabriqué notamment en mettant en oeuvre un procédé selon l'une au moins des revendications précédentes, sa structure étant formée par de grains constitués d'au moins une des matières suivantes : magnésie ou spinelle de magnésie, lesdits grains étant entourés d'une phase de liant renfermant du polytypoïde d'AlN et sa résistance à la compression à froid étant supérieure ou égale à 40 MPa.

10. Matériau réfractaire selon la revendication 9, la proportion en masse desdits grains étant comprise entre 95 et 50 % en masse, et la proportion de ladite phase de liant étant comprise entre 5 et 50 % en masse, lesdites proportions étant exprimées par rapport au ledit matériau.

11. Matériau réfractaire selon l'une au moins des revendications précédentes, la proportion du polytypoide de MgSiAlON au sein de la phase de liant étant comprise entre 30 et 100 % en masse, ou la proportion du polytypoïde de MgAlON étant comprise entre 10 et 100 % en masse, lesdites proportions étant exprimées par rapport à la phase de liant.

12. Matériau réfractaire selon l'une au moins des revendications précédentes, son module d'élasticité étant inférieur ou égal à 80 GPa.

13. Matériau réfractaire selon l'une au moins des revendications précédentes, sa densité volumétrique étant supérieure ou égale à 2,80 g/cm³.

14. Matériau réfractaire selon l'une au moins ders revendications précédentes, sa porosité ouverte étant inférieure ou égale à 20 %.
